# EUROPÄISCHE PATENTSCHRIFT

(11) **EP 1 720 403 B1**
(45) Veröffentlichungstag und Bekanntmachung des Hinweises auf die Patenterteilung: **13.05.2009**
(21) Anmeldenummer: 05706764.7
(22) Anmeldetag: 11.02.2005
(51) Int. Cl.: A01G 33/00

(54) **TRÄGERVORRICHTUNG ZUR KULTUR VON MAKROORGANISMEN IN MARINEN GEWÄSSERN**
SUPPORT DEVICE FOR THE CULTIVATION OF MACROORGANISMS IN MARINE WATERS
DISPOSITIF SUPPORT POUR LA CULTURE DE MACRO-ORGANISMES DANS DES EAUX MARINES

(30) Priorität: 29.02.2004 DE 102004010652
(43) Veröffentlichungstag der Anmeldung: 15.11.2006
(73) Patentinhaber: Stiftung Alfred-Wegener-Insitut für Polar- und Meeresforschung, 27570 Bremerhaven (DE)
(72) Erfinder: BUCK, Bela, Hieronymus, 28213 Bremen (DE); BUCHHOLZ, Cornelia, Maria, 27498 Helgoland (DE)
(86) Internationale Anmeldenummer: PCT/DE2005/000234
(87) Internationale Veröffentlichungsnummer: WO 2005/082129

(56) Entgegenhaltungen:
- WO-A-86/02395
- US-A- 5 309 672
- PATENT ABSTRACTS OF JAPAN Bd. 2000, Nr. 08, 6. Oktober 2000 (2000-10-06) & JP 2000 125694 A (TANAKA MORIMASA), 9. Mai 2000 (2000-05-09)
- PEREZ R ET AL: "UNDARIA, UNE JAPONAISE EN BRETAGNE : NOUVELLE TECHNIQUE DE CULTURE D'UNE ALGUE ALIMENTAIRE" EQUINOXE, IFREMER. NANTES, FR, Nr. 36, 1. Dezember 1991 (1991-12-01), Seiten 19-30, XP000259152 ISSN: 0765-5320
- PATENT ABSTRACTS OF JAPAN Bd. 2000, Nr. 19, 5. Juni 2001 (2001-06-05) & JP 2001 054330 A (OMI KAIJI KOGYO KK), 27. Februar 2001 (2001-02-27) in der Anmeldung erwähnt

## Beschreibung

Die Erfindung bezieht sich auf eine Trägervorrichtung zur Kultur von Makroorganismen in marinen Gewässern mit zumindest einer Ringkonstruktion, die unterhalb der Wasseroberfläche zwischen zumindest einem Auftriebsmittel und einer Verankerung angeordnet ist und in einem geschlossenen Außenring eine spinnennetzartige Kultureinheit aus radialen Tragleinen und azimutalen Kulturleinen aufweist.

Zu den in marinen Gewässern, wie den Meeren und Ozeanen, kulturfähigen Makroorganismen zählen in erster Linie Algen (Makroalgen wie Braun-, Grün- und Rotalgen) und Muscheln (wie Miesmuschel und Austern). In Ostasien werden traditionell Algen gezüchtet, wobei die dazu nötigen Erfahrungen bereits einige Jahrhunderte alt sind. Dort werden jedoch nur Meeresgebiete genutzt, die weitgehend und sehr gut gegen unwirsche Wetter- und Seebedingungen geschützt sind, wie beispielsweise Buchten oder Ästuare. Langleinen-, Floß- oder Pfahlsysteme sind die hauptsächlichen Trägervorrichtungen für Algenkulturen. Diese sind am Boden verankert und gegen raue See sehr anfällig. Meeresareale, in denen harsche Wetterbedingungen vorherrschen, wurden bisher für die Aquakultur aller potenziell züchtbaren Meeresorganismen kaum genutzt. Erst seit einigen Jahren erstreckt sich die marine Aquakultur aufgrund von Nutzerkonflikten im Küstenmeer und den damit verbundenen komplizierten Rechtslagen, den urbanen Abwässern, sowie besseren Sauerstoffbedingungen auch in den Offshorebereich der Meere. Es wurden die ersten absenkbaren Tauchkäfige für die Kultur von Meeresfischen im Offshorebereich bereits in den 1970er Jahren in Deutschland entwickelt und weitere Entwicklungen später in Kanada und in den USA eingesetzt, wobei solche Systeme noch Pilotcharakter haben. Makroalgen wurden jedoch in Gebieten mit ungünstigen Wetterbedingungen weltweit hauptsächlich zu Forschungszwecken gezüchtet. Zu erwähnen ist hier ein Projekt von der Isle of Man, wo verschiedene Konstruktionen, insbesondere die Langleinentechnik, eingesetzt wurden. Weiterhin ist aus der japanischen Zusammenfassung zu der JP 2001054330 A eine Käfigkonstruktion zur Algenkultur in 10 m bis 25 m Seetiefe bekannt, bei der als Kultureinheit zwischen flutbaren Eckbehältern eine Vielzahl von Streben und Seilen gespannt ist. Fieren und Hieven der Konstruktion erfolgt durch Belüften und Fluten der Eckbehälter und durch Angreifen an der instabilen Kultureinheit selbst. Aus der japanischen Zusammenfassung JP 11196696 A ist eine pfahlartige Steckkonstruktion mit in einem Auge eingebetteten Algenkulturen bekannt, die in den Meeresboden eingesteckt wird. Aus der WO 86/02395 A1 ist es weiterhin bekannt, laminare Algenkulturen an ihrem unteren Ende über eine mehrarmige Seilanordnung an einem Pflock im Meeresboden zu befestigen. Diese Konstruktionen sind jedoch nur in Küstennähe einsetzbar und für starken Seegang ungeeignet.

Auch in Deutschland gab es in den Jahren 1994 bis 1996 vor Helgoland Versuche, unter Nordseebedingungen Makroalgen zu züchten. Es handelt sich hierbei um ein vom BMBF geförderten Projekt: "Massenkultur mariner Makroalgen bei Helgoland zur Gewinnung von Phykokolloiden und zur Verwendung als Biosorptionsmittel" von Lüning und Buchholz (vergleiche **Abschlussbericht** zum Vorhaben 03F0096A, 1996, Teil 1). Es wurden versuchsweise unterschiedliche Trägervorrichtungen mit einer Langleinen-, einer Leiter- und einer Gitterkonstruktion entwickelt, um die Makroalgen *Laminaria saccharina* und *Laminaria digitata* zu züchten. Keine dieser Konstruktionen konnte jedoch den ozeanographischen Verhältnissen vor Helgoland standhalten. Zum ersten Mal wurde hier versucht, eine Ringkonstruktion für die Kultur von Laminaria-Arten zu bauen und an verschiedenen Standorten einzusetzen. Jedoch sind ein Großteil dieser Ringe unter dem Druck der starken und permanenten Strömung zerstört worden. Andere Ringe, die den Einflüssen standhielten, zeigten jedoch teilweise einen verkümmerten Bewuchs. Beim Versuch, eine Trägervorrichtung mit einer Ringkonstruktion im geschützteren Vorhafen aufzubauen, um den Kräften der Wellen und Strömung aus dem Wege zu gehen, zeigte sich ein anfangs erfolgreiches Längenwachstum der Algen, jedoch verkümmerten diese schnell, da sich aufgrund der geringen Strömung diverse Parasiten, Tiere und andere Algen auf den Blättern der Laminarien niederließen, wodurch diese abbrachen und dadurch sogar negative Wachstumsraten zu verzeichnen waren. Es wurde offensichtlich, dass die Algen, die in der Natur nur an exponierten Standorten zu finden sind, eine gewisse Umströmung brauchten.

Bei den aus dem **Abschlussbericht** (ebenda Seiten 6 bis 9 und Abbildungen 12 bis 16 und 18) bekannten Trägervorrichtungen handelt es sich um solche mit unterschiedlichen Ringkonstruktionen. Unter anderem wurde eine unter der Wasseroberfläche angeordnete Ringkonstruktion aus einem einzelnen PE-Kunststoffrohr als Außenring mit einem Durchmesser von 5 m erprobt. Der Außenring war mit 80 m Kulturleine in spinnenetzförmiger Anordnung versehen. Die Kulturleine dient dem Abwachsen der Makroorganismen, die zum einen aus dem Meer eingefangen (beispielweise Muschellarven) oder als Zuchtsaat zuvor in die Kulturleine eingebracht (beispielsweise Algensaat) werden können. Der Auftrieb wurde durch acht Fender (zu je 23kg) als Auftriebsmittel gewährleistet, die am Außenring gleichmäßig verteilt angeordnet waren und außerdem als Markierungskörper dienten. Als Nachteil hat sich gezeigt, dass die radial angeordneten Fender entgegen der Vermutung, die Ringkonstruktion auch bei starken Strömungen in der Waagerechten zu halten, als falsch erwies. Einzelne Fender konnten die Ringkonstruktion in der starken Strömung nicht tragen und wurden unter die Wasseroberfläche gedrückt. Dadurch wurden die Fender zunehmend komprimiert und wieder entlastet und teilweise zerstört. Das Verankerungssystem war so konzipiert, dass die gesamte Ringkonstruktion abgebaut werden musste, wenn die Ernte erfolgte. Dazu musste von einem Schiff aus die Ringkonstruktion an einem seiner acht Fender angepickt und hochgehoben werden. Dadurch wurde der Außenring senkrecht zur Wasseroberfläche gedreht, was oftmals durch das Touchieren des Außenrings mit dem Schiffsrumpf den Verlust von Algen zur Folge hatte. Auch das Bergen der Ringkonstruktion über mehrere am Umfang befestigte Seile erwies sich als nachteilig, da eine starke Verformung der algenbewachsenen Ringkonstruktion auftrat. Meistens musste die Ringkonstruktion abgeschäkelt werden, um diese für die Ernte in den geschützten Hafen zu ziehen. Die Fender konnten sich außerdem miteinander verhaken und sorgten so zu einem Schamfielen der freien Leinen.

Eine erste mögliche, wenn auch theoretische Weiterentwicklung der beschriebenen Trägervorrichtung mit Ringkonstruktion ist der **AWI-Veröffentlichung** "Beispiele aus unserer Forschung 2002", Seiten 33 bis 39 unter dem Titel "Kombinierte Windpark- und Marikulturnutzung in der Nordsee" von B.H. Buck als Ergebnis einer zuvor angefertigten **Machbarkeitsstudie** (Berichte zur Polar- und Meeresforschung 412/2002, Kapitel 6, Seiten 74 bis 85) zu entnehmen. Die in der AWI-Veröffentlichung dargestellten Ringe und Langleinen sind Zuchtmöglichkeiten und bisher nur Theorie. Windparks gibt es noch nicht. Der schematischen Darstellung gemäß Figur 9b ist die Anordnung einer Trägervorrichtung mit einer Ringkonstruktion in einem Offshoregebiet zu sehen, bei der die Trägervorrichtung zwischen dem Pylon einer Windenergieanlage und einer Verankerung aus Ankerkette und Ankerstein 1,5 m bis 5 m unter der Wasseroberfläche stationär gehalten wird. Die beiden Haltepunkte sind dabei an den äußersten Punkten am Außenring der Ringkonstruktion befestigt. Die Anordnung von zwei Verankerungen mit Befestigungen am Außenring (Figur 9b) ist ebenso möglich wie die Zusammenschaltung mehrerer Ringkonstruktionen um den Pylon herum (Figur 9a). Der geschlossene Außenring weist wiederum eine spinnennetzartige Kultureinheit aus radialen Tragleinen und azimutalen Kulturleinen auf, wobei die Netznabe von einem gemeinsamen Knoten gebildet wird.

Mit den zuletzt beschriebenen Trägervorrichtungen mit Ringkonstruktionen aus einem oder mehreren Außenringen, von denen die vorliegende Erfindung als **nächstliegendem Stand der Technik** ausgeht, soll insbesondere in Offshoregebieten die Möglichkeit geschaffen werden, marine Makroorganismen in geschützten und ungeschützten Meeresgebieten zu kultivieren, in denen ein mittleres bis starkes Strömungsregime sowie Perioden mit hohen Wellen vorherrschen oder zeitweise auftreten können. Geschützte und weitgehend ungeschützte Gebiete befinden sich in Europa in allen Bereichen der Ausschließlichen Wirtschaftszone (AWZ) und an fast allen Orten im Küstenmeer. Da das Küstenmeer aufgrund von Nutzerkonflikten und aus Naturschutzgründen kaum genutzt werden kann, zeichnet es sich in der marinen Aquakultur ab, graduell immer mehr exponierte, weitgehend offene (ungeschützte) Meeresgebiete zu nutzen.

Die **Aufgabe** für die Erfindung ist daher darin zu sehen, eine Trägervorrichtung der eingangs beschriebenen Art so weiterzubilden, dass ein Einsatz sowohl in geschützten als auch in den ungeschützten Offshorebereichen unter erschwerten Bedingungen erfolgen kann. Dabei sollen eine einfache Handhabung der auf unterschiedliche Größen auslegbaren Trägervorrichtung, eine nutzerfreundliche und kostengünstige Bauweise sowie die Möglichkeit, mit möglichst wenig Aufwand die Trägervorrichtung aus- und einzubringen, zu warten, zu beproben und die gezüchteten Makroorganismen zum frei bestimmbaren Zeitpunkt ihrer Marktreife zu ernten, Berücksichtigung finden. Beschädigungen der Trägervorrichtung sollen zu jedem Betriebszeitpunkt weitgehend vermieden werden.

Als **Lösung** für diese Aufgabe ist bei einer gattungsgemäßen Trägervorrichtung deshalb erfindungsgemäß vorgesehen, dass der Außenring über eine obere Hahnepot mit einem zentralen Auftriebsmittel und über eine untere Hahnepot mit der Verankerung verbunden ist, wobei jede Hahnepot aus einem zentralen Hahnepotring und mehreren gleichmäßig am Umfang des Außenrings befestigten und nach oben und unten jeweils von gemeinsamen Anschlagpunkten aus verlaufenden Hahnepotseilen aufgebaut ist, dass die radialen Tragleinen unter Spannung an einem zentralen Innenring befestigt sind und dass das zentrale Auftriebsmittel direkt mit der Verankerung über zumindest ein durch den zentralen Innenring verlaufendes und an den beiden Hahnepotringen angeschlagenes zentrales Tragseil verbunden ist.

Die Vorteile der erfindungsgemäßen Trägervorrichtung liegen in der besonderen Ausgestaltung einzelner Teilkomponenten und deren Funktionsprinzip. Dazu gehören die Ausführung und Umsetzung der Verankerung, der Ringkonstruktion und des Auftriebs. Durch diese Ausgestaltungen ist das Ausbringen und auch die Ernte von Makroorganismen, beispielsweise Algen, auf See sicher gewährleistet. Weitere Wartungs- oder Bergungsarbeiten sind sehr leicht durchzuführen, eine Beschädigung, Zerstörung oder sogar Verlust der gesamten Trägervorrichtung oder Teilen davon wird sicher vermieden. Zuvor nicht nutzbare Flächen im offenen Meer können nun mit Hilfe der Trägervorrichtung nach der Erfindung in marinen Gewässern für die effektive Kultivierung von Makroorganismen genutzt werden. Die erfindungsgemäße Trägervorrichtung ist durch ihre speziellen Konstruktionseinheiten im Inshore- und Offshorebereich einsetzbar. Sie bleibt durch ihre Einpunkt-Verankerung in der Wassersäule beweglich. Durch den Schojkreis und bei einer in der Strömungsrichtung ausgerichteten diagonalen Stellung werden für alle Makroorganismen in der Ringkonstruktion ein ausreichend frischer Nährstoff- und Planktoneintrag gewährleistet. Die besondere Konstruktion behält beim Hieven eine waagerechte Stellung und vereinfacht so bedeutsam die Ernte und Wartung.

Die erfindungsgemäße Trägervorrichtung ist dafür so aufgebaut, dass vom Auftriebsmittel eine direkte Verbindung über zumindest ein zentrales Tragseil zur Verankerung besteht. Wird nun das zentrale Auftriebsmittel gehievt, beispielsweise zum Schleppen der gesamten Trägervorrichtung bei geplanter Ortsveränderung oder bei der Algenernte, so werden keine Zugkräfte in die Ringkonstruktion eingeleitet. Kräfte, die durch Strömungen und Wellengang auf das Auftriebsmittel und/oder die Ringkonstruktion einwirken sowie durch das Eigengewicht der Ringkonstruktion entstehen, werden direkt über das oder die zentralen Tragseile in die Verankerung übertragen. Die Ringkonstruktion mit der Kultureinheit aus radialen Tragleinen und azimutalen Kulturleinen hängt an der vertikalen Verankerung mittels einer doppelten Hahnepot, wobei die obere Hahnepot mit mehreren Hahnepotseilen an dem zentralen Auftriebsmittel und dem Außenring angebracht ist und eine weitere untere Hahnepot ebenfalls den Außenring mit einem unteren Verbindungspunkt im zentralen Tragseil verknüpft. Die obere Hahnepot hält das Eigengewicht von Ringkonstruktion und Algenkulturen, die untere Hahnepot verhindert, dass die Ringkonstruktion über das zentrale Auftriebsmittel weggezogen wird, wenn sie bei starker Strömung mitgerissen wird und diagonal in der Wassersäule hängt. Bemerkt sein an dieser Stelle, dass zwar immer von einer "Ringkonstruktion" und einem "Außenring" gesprochen wird, dass dadurch aber nicht automatisch dessen kreisrunde Form impliziert sein soll. Beliebige Vielecke, beispielsweise in gut ankoppelbarer Wabenform, sollen ebenfalls von dem Begriff "Ringkonstruktion" erfasst sein. Wichtig bei der Wahl dieses Ausdruckes war es, zum Ausdruck zu bringen, dass es sich um eine geschlossene Konstruktion handelt im Gegensatz zu den bekannten Leinen und Gitterkonstruktionen.

Zwar wirken Kräfte, die durch Strömung und Wellen entstehen, trotz des Hängesystems mit den beiden Hahnepoten auch auf die Ringkonstruktion ein, was sich im rauen Offshore-Bereich nicht vermeiden lässt. Damit die Ringkonstruktion durch solche Kräfte, die insbesondere durch kurze Wellenfrequenzen zunehmen, jedoch trotzdem nicht deformiert wird, kann gemäß einer Erfindungsausgestaltung vorteilhaft vorgesehen sein, dass jeder gemeinsame Anschlagpunkt am Außenring von einer biegesteifen Manschette gebildet wird, die jeweils für ein oberes und ein unteres Hahnepotseil sowie für eine radiale Tragleine eine Öse aufweist. Einander zugeordnete Hahnepotseile, die von oben und von unten kommen, sind immer paarweise an einer Manschette angebracht. Sollten also Kräfte von einem Hahnepotseil der oberen Hahnepot auf den Außenring einwirken, so werden diese Kräfte durch die Manschette auf das entsprechend zugeordnete Hahnepotseil der unteren Hahnepot übertragen. Durch die Wahl der Breite der Manschetten kann der Kraftübertragungsvorgang noch unterstützt werden. Gleiches gilt für das Material der biegesteifen Manschette, die insbesondere aus Stahl, aber auch aus einem hochfesten Kunststoff, z.B. PP, PE oder PFT hergestellt sein kann. Bei der Verwendung von Stahl kann insbesondere das Anbringen der verschiedenen Ösen durch Anschweißen problemlos erfolgen und ein Rosten im Seewasser vermieden werden.

Die nach innen verspannten Tragleinen, an denen die im Außenring geschlossen umlaufenden Kulturleinen befestigt sind, sind zur Mitte hin an einem zentralen Innenring befestigt. Dadurch wird unabhängig von der Belastung auf die Verankerung einem Kollabieren der gesamten Kultureinheit entgegengewirkt, die Tragleinen samt Kulturleinen werden immer auf Spannung gehalten. Der zentrale Innenring dient außerdem als Führung für das zentrale Tragseil, wodurch ferner ein Schamfielen der Kulturleinen an dem zentralen Tragseil verhindert wird. Weiterhin kann vorteilhaft vorgesehen sein, dass der zentrale Innenring für jede radiale Tragleine eine Öse aufweist. Somit können die Tragleinen im Zentrum des Außenrings gut befestigt werden, ohne dass ein hinderlicher und schwer zu beherrschender Knoten entsteht. Zusätzlich können so leicht Leinen nach Bedarf ausgetauscht werden. Das Zentrum der Kultureinheit selbst bleibt für die Durchführung des zentralen Tragseils frei. Eine einfache Befestigungsmöglichkeit ergibt sich auch, wenn gemäß einer nächsten Erfindungsausgestaltung jede radiale Tragleine an einer Öse einer Manschette um den Außenring befestigt ist. Dabei kann die Manschette nur der Befestigung einer radialen Tragleine, aber auch gleichzeitig einem Paar von Hahnepotseilen dienen. Weiterhin kann vorteilhaft jede radiale Tragleine über ein Spannelement mit einer Öse des zentralen Innenrings verbunden sein. Dadurch kann eine einfache, dauerhafte Spannung in der gesamten Kultureinheit aufgebracht werden, die sich auch unter sich ändernden Lastverhältnissen, beispielsweise durch zunehmenden Algenbewuchs, durch sich ändernde Strömungsverhältnisse oder beim Ausbringen und Einholen der Trägervorrichtung, nicht betriebsstörend ändert.

Gemäß weiterer vorteilhafter Erfindungsausgestaltungen kann der zentrale Hahnepotring der oberen Hahnepot direkt an dem zentralen Auftriebsmittel oder unter Zwischenschaltung einer in ihrer Länge festlegbaren Absenkleine an dem zentralen Auftriebsmittel angreifen. Während die erste Variante eine sehr kompakte Trägervorrichtung konzipiert, die besonders leicht handhabbar ist, ermöglicht die zweite Variante eine höhenveränderbare Positionierung der Ringkonstruktion in der Wassersäule unterhalb der Wasseroberfläche. Dazu wird der Abstand zwischen dem Auftriebsmittel und dem oberen Hahnepotring durch Vorsehen einer entsprechend langen oder verlängerten oder verkürzten Absenkleine verlängert oder verkürzt. Eine tief hängende Ringkonstruktion ist günstig für die Kultur von jungen Algen, denn so wird das schädigende, starke UV-Licht durch die darüberliegende Wassersäule gefiltert. Außerdem sind in tieferen Wasserschichten die Orbitalbewegungen der Wasserteilchen geringer und verhindern so das Abreißen der jungen Algen bei starkem Wellengang.

Sind die Algen dann größer, kann die Ringkonstruktion zur besseren Lichtausbeute dann weiter oben in der Verankerung eingehängt werden.

Als weiterer Vorteil wurde bereits die gute Nahrungszufuhr durch das freie Drehen der gesamten Trägervorrichtung in der Wasserströmung erwähnt. Dafür ist es gemäß einer nächsten Erfindungsausgestaltung vorteilhaft, wenn der zentrale Hahnepotring der unteren Hahnepot über eine frei drehbare Drehkupplung an einer mit einem Ankerstein verbundenen Ankerkette als Verankerung angreift. Somit wird eine freie Drehung der Ringkonstruktion über einer Einpunkt-Bodenverankerung ermöglicht, ohne dass es zu störenden Seilaufdrillungen und Rückstellkräften kommt. Gemäß einer anderen Erfindungsausgestaltung können alle oberen Hahnpotseile gleichlang sein. Dadurch kann eine waagerechte Ringkonstruktionsaufhängung beim Hebevorgang gewährleistet und Wartungsarbeiten sowie Emtevorgänge erleichtert werden. Weiterhin wurde bereits die gute Befestigungsmöglichkeit der Tragleinen und Hahnepotseilen an entsprechenden Ösen von Manschetten und zentralem Innenring erwähnt. Diese kann noch verbessert werden, wenn gemäß einer anderen Erfindungsfortführung alle Seil-, Leinen- und Kettenverbindungen über Ösen an den Seil-, Leinen und Kettenenden hergestellt sind. Schlecht herstell- und lösbare Knoten mit undefinierten Längenverhältnissen werden so vermieden. Eine problemlose Wiederverwendbarkeit der Seile, Leinen und Ketten ist ohne Längenverlust gewährleistet.

Eine besonders große Festigkeit des Außenrings ergibt sich zudem, wenn dieser vorteilhaft aus einer in einem Kunststoffrohr umlaufenden Stahltrosse besteht. Das Kunststoffrohr kann nach dem Einziehen und Schließen der Stahltrosse mit einer entsprechenden Muffe geschlossen werden. Eine Festlegung des Durchmessers des Außenrings ist einfach möglich, ohne dass die Festigkeit der Ringkonstruktion gefährdet wird. Ein besonders einfaches Ausbringen und Einholen der gesamten Trägervorrichtung kann erzielt werden, wenn gemäß einer nächsten Erfindungsfortführung das zentrale Auftriebsmittel eine Öse zum Hieven und Fieren der Trägervorrichtung aufweist. Ein zusätzliches Anschlagen von entsprechenden Seilen ist dann nicht erforderlich. Das Heben und Senken der gesamten Trägervorrichtung in der zentralen Achse zur Verankerung, das eine besonders geringe Belastung der Ringkonstruktion ermöglicht, wird einfach und zuverlässig ermöglicht. Schließlich kann noch eine Vergrößerung des Ertrags an gezüchteten Makroorganismen erzielt werden, wenn vorteilhaft mehrere gleichartige Ringkonstruktionen zusammengeschaltet sind. Dabei zeigt jede Ringkonstruktion denselben Aufbau mit einer zentralen vertikalen direkten Verbindung zwischen Auftriebsmittel und Verankerung. Eine Verschaltung kann zwischen den Außenringen über entsprechende lösbare Ösenverbindungen vorgenommen werden.

**Ausbildungsformen der Erfindung** werden beispielhaft nachfolgend zum weiteren Verständnis der Erfindung anhand der schematischen Figuren näher erläutert. Dabei zeigt :
- **Figur 1**: eine perspektivische Gesamtansicht der Trägervorrichtung,
- **Figur 2**: eine perspektivische Detailansicht einer Manschette,
- **Figur 3**: eine perspektivische Detailansicht des zentralen Innenrings und
- **Figur 4**: eine perspektivische Detailansicht der unteren Hahnepotverbindung zum zentralen Tragseil.

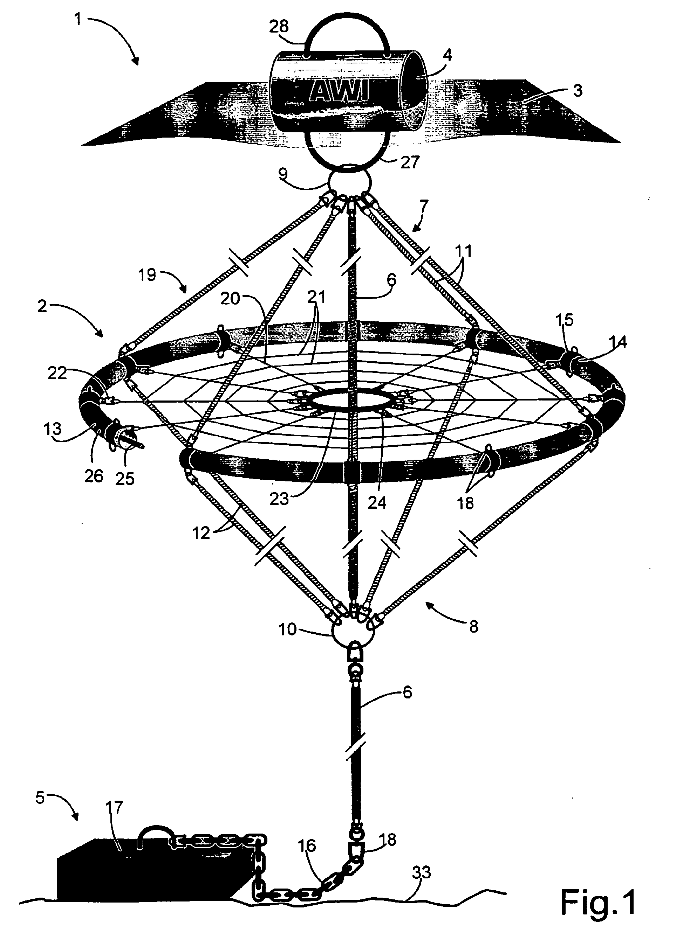

Die **Figur 1** zeigt eine mögliche Ausführungsform einer Trägervorrichtung **1** nach der Erfindung zur Kultur von Makroorganismen, beispielsweise Algen, in marinen Gewässern. Die Trägervorrichtung **1** weist eine Ringkonstruktion **2** auf, die unterhalb der Wasseroberfläche **3** mit veränderbarer Positionstiefe angeordnet ist. Dazu ist die Ringkonstruktion **2** zwischen einem Auftriebsmittel **4** an der Wasseroberfläche **3** und einer Verankerung **5** auf dem Gewässerboden **33** angeordnet. Damit möglichst geringe Kräfte, die sowohl durch das Gewässer als auch durch Transportvorgänge hervorgerufen werden, auf die Ringkonstruktion **2** einwirken, ist diese aus der unmittelbaren Krafteinleitung entkoppelt. Dazu ist das Auftriebsmittel **4** direkt mit der Verankerung **5** über ein zentrales Tragseil **6,** hierbei kann es sich beispielsweise um ein Stahlseil handeln, verbunden. Somit kann die Ringkonstruktion **2** ohne zusätzliche Kraftbeaufschlagung, beispielsweise durch die Verankerung **5,** geborgen werden und muss nur die Erntelast der gezüchteten Makroorganismen tragen.

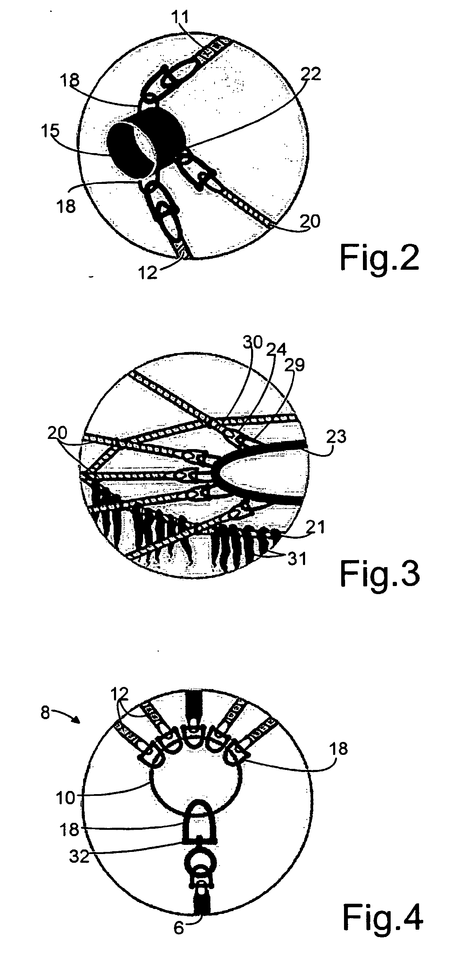

Die Ringkonstruktion **2** ist über eine obere Hahnepot **7** und eine untere Hahnepot **8** mit dem zentralen Tragseil **6** verbunden. Dazu weist jede Hahnepot **7, 8** einen zentralen Hahnepotring **9, 10** auf, von dem mehrere obere und untere Hahnepotseile **11, 12,** im gewählten Ausführungsbeispiel jeweils vier, zum Außenring **13** der Ringkonstruktion **2** verlaufen. Die Länge der oberen und unteren Hahnepotseile **11, 12** und des zentralen Tragseils **6** ist wählbar (in der **Figur 1** durch Unterbrechungen angedeutet) und abhängig von der einsatz- und handhabungsbedingten Gesamtdimensionierung der Trägervorrichtung **1.** Die Verteilung der Hahnepotseile **11, 12** auf dem Außenring **13** erfolgt gleichmäßig, damit insbesondere die Erntelast beim Hieven der Ringkonstruktion **2** keine einseitigen Ringverbiegungen hervorrufen kann und die Ringkonstruktion **2** gleichmäßig eingespannt ist. Für eine gute Kraftweiterleitung sorgt außerdem das Vorsehen von gemeinsamen Anschlagpunkten **14,** in denen jeweils ein oberes Hahnepotseil **11** und ein unteres Hahnepotseil **12** gemeinsam befestigt sind. Zur guten und stabilen Befestigung dienen dabei biegesteife Manschetten **15** an den Anschlagpunkten **14,** die für jedes Hahnepotseil **11, 12** eine Öse **18** aufweisen (vergleiche **Figur 2**).

Im gewählten Ausführungsbeispiel ist an dem oberen Hahnpotring **9** direkt das Auftriebsmittel **4** befestigt, sodass die geringste Eintauchtiefe für die Ringkonstruktion **2** mit der höchsten UV-Einstrahlung eingestellt ist. Zur Vergrößerung der Eintauchtiefe wird zwischen dem Auftriebsmittel **4** und der oberen Hahnepot **7** ein in seiner Länge entsprechend bemessenes oder einstellbares Absenkseil zwischengekoppelt (in der **Figur 1** nicht weiter dargestellt). Am unteren Hahnepotring **10** ist ein weiteres Stück des zentralen Tragseils **6** befestigt, das an seinem anderen Ende mit einer Ankerkette **16** verbunden ist, die zu einem Ankerstein **17** führt. Im gewählten Ausführungsbeispiel bilden Ankerkette **16** und Ankerstein **17** die Verankerung **5.** Weiterhin werden alle Seil-, Leinen- und Kettverbindungen über einfache Ösen **18** hergestellt, die eine gute Montage und Verbindungsstabilität garantieren.

Im Außenring **13** der Ringkonstruktion **2** befindet sich eine spinnennetzartige Kultureinheit **19** zur Aufzucht der Makroorganismen. Hierbei handelt es sich um radiale Tragleinen **20,** zwischen denen azimutale Kulturleinen **21** in konzentrischen Ringen verlaufen. Die Leinen sind beispielsweise durch einfache Knoten oder mittels Kabelbindern miteinander verbunden. Die radialen Tragleinen **20** sind am Außenring **13** wiederum über Manschetten **15** an einer dritten Öse **22** befestigt (vergleiche **Figur 2**). In der Figur **1** ist erkennbar, dass nur jede dritte Manschette **15** auf dem Außenring **13** auch gleichzeitig der jeweiligen Befestigung eines oberen und eines unteren Hahnepotseils **11, 12** dient. Andere Belegungen und Ausführungen, beispielsweise mit Manschetten **15** mit unterschiedlichen Ösenanzahlen, sind ebenfalls möglich. Die gezeigte Ausführung ist jedoch besonders günstig, da sie nur eine Sorte von Manschetten **15** erfordert. An ihrem anderen Ende sind die Tragleinen **20** mit einem zentralen Innenring **23** verbunden, der als Führung und ungestörter Durchgang für das zentrale Tragseil **6** dient. Zur Straffung der Tragleinen **20** sind im gewählten Ausführungsbeispiel Spannelemente **24** zwischen geschaltet (vergleiche **Figur 3**), sodass die gesamte Kultureinheit **19** immer straff gehalten werden kann. Die Tragleinen **20** können aber unter Straffziehung auch direkt durch die Ösen **29** gezogen und dann verspleißt werden.

Im gewählten Ausführungsbeispiel ist der Außenring **13** aus einer geschlossenen Stahltrosse **25** aufgebaut, die in einem geschlossenen Kunststoffrohr **26,** beispielsweise aus PE, umläuft (in der **Figur 1** aufgebrochen dargestellt). Der Außenring **13** kann einen Durchmesser von ungefähr 5 m haben und weist in der beschrieben Ausführung eine gute Stabilität auf. Weiterhin ist das Auftriebsmittel **4** in Bojenform dargestellt, die eine untere Öse **27** zur Befestigung des zentralen Tragseils **6** und eine obere Öse **28** zum einfachen Hieven und Fieren der Trägervorrichtung aufweist.

Die **Figur 2** zeigt eine Detailansicht einer Manschette **15** mit drei Ösen **16, 22.** Die beiden Ösen **16** dienen der Befestigung des oberen und unteren Hahnepotseils **11,12,** die Öse **22** dient der Befestigung der radialen Tragleine **20** jeweils am Außenring **13.** Die gezeigte Manschette **15** ist geschlossen aus Stahl ausgeführt, die Ösen **16, 22** sind angeschweißt. Eine biegefeste Ausführung aus Kunststoff ist ebenfalls möglich.

In der **Figur 3** ist eine Detailansicht des zentralen Innenrings **23** mit den über Ösen **29, 30** befestigten radialen Tragleinen **20** der Kultureinheit **19** dargestellt. Der zentrale Innenring **23** ist wiederum aus rostfreiem Stahl und weist für jede radiale Tragleine **20** eine Öse **29** auf. Zwischen den Ösen **29, 30** sind Spannelemente **24,** beispielsweise einfache Spann- oder Spiralfedern, angeordnet, die der Straffhaltung der radialen Tragleinen **20** und damit der gesamten Kultureinheit **19** dienen. Angedeutet ist in der **Figur 3** ein laminarer Algenbewuchs **31** an den Kulturleinen **21.**

Die **Figur 4** schließlich zeigt eine Detailansicht der unteren Hahnepot **8.** Über obere Ösen **18** sind die unteren Hahnepotseile **12** und das zentrale Tragseil **6** mit dem zentralen Hahnepotring **10** verbunden. Über eine untere Öse **18** und eine frei drehbare Drehkupplung **32** ist der zentrale Hahnepotring **10** mit dem unteren Abschnitt des zentralen Tragseils **6** verbunden. Eine solche Anordnung aus Öse **18** und Drehkupplung **32** kann auch zwischen dem Tragseil **6** und der Ankerkette **16** vorgesehen sein (vergleiche **Figur 1**), sodass sich der gesamte Konstruktionsring **2** frei in der Strömung drehen kann.

Die vorbeschriebenen Ausführungsformen der Trägervorrichtung nach der Erfindung sind beispielhaft. Andere Ausführungsformen im Rahmen der Offenbarung sind ebenfalls möglich und von den Ausführungen eingeschlossen.

### Bezugszeichenliste

- **1**: Trägervorrichtung
- **2**: Ringkonstruktion
- **3**: Wasseroberfläche
- **4**: Auftriebsmittel
- **5**: Verankerung
- **6**: zentrales Tragseil
- **7**: obere Hahnepot
- **8**: untere Hahnepot
- **9**: oberer zentraler Hahnepotring
- **10**: unterer zentraler Hahnepotring
- **11**: oberes Hahnepotseil
- **12**: unteres Hahnepotseil
- **13**: Außenring
- **14**: Anschlagpunkt
- **15**: Manschette
- **16**: Ankerkette
- **17**: Ankerstein
- **18**: Öse
- **19**: Kultureinheit
- **20**: radiale Tragleine
- **21**: azimutale Kulturleine
- **22**: Öse
- **23**: zentraler Innenring
- **24**: Spannelement
- **25**: Stahltrosse
- **26**: Kunststoffrohr
- **27**: untere Öse
- **28**: obere Öse
- **29**: Öse
- **30**: Öse
- **31**: Algenbewuchs
- **32**: Drehkupplung
- **33**: Gewässerboden

## Patentansprüche

1. Trägervorrichtung (1) zur Kultur von Makroorganismen (31) in marinen Gewässern mit zumindest einer Ringkonstruktion (2), die unterhalb der Wasseroberfläche (3) zwischen zumindest einem Auftriebsmittel (4) und einer Verankerung (5) angeordnet ist und in einem geschlossenen Außenring (13) eine spinnennetzartige Kultureinheit (19) aus radialen Tragleinen (20) und azimutalen Kulturleinen (21) aufweist,
**dadurch gekennzeichnet, dass**
der Außenring (13) über eine obere Hahnepot (7) mit einem zentralen Auftriebsmittel (4) und über eine untere Hahnepot (8) mit der Verankerung (5) verbunden ist, wobei jede Hahnepot (7, 8) aus einem zentralen Hahnepotring (9, 10) und mehreren gleichmäßig am Umfang des Außenrings (13) befestigten und nach oben und unten jeweils von gemeinsamen Anschlagpunkten (14) aus verlaufenden Hahnepotseilen (11, 12) aufgebaut ist, dass die radialen Tragleinen (20) unter Spannung an einem zentralen Innenring (23) befestigt sind und dass das zentrale Auftriebsmittel (4) direkt mit der Verankerung (5) über zumindest ein durch den zentralen Innenring (23) verlaufendes und an den beiden Hahnepotringen (9, 10) angeschlagenes zentrales Tragseil (6) verbunden ist.

2. Trägervorrichtung (1) nach Anspruch 1,
**dadurch gekennzeichnet, dass**
jeder gemeinsame Anschlagpunkt (14) am Außenring (13) von einer biegesteifen Manschette (15) gebildet wird, die jeweils für ein oberes und ein unteres Hahnepotseil (11, 12) sowie für eine radiale Tragleine (20) eine Öse 18, 22) aufweist.

3. Trägervorrichtung (1) nach Anspruch 1 oder 2,
**dadurch gekennzeichnet, dass**
der zentrale Innenring (23) für jede radiale Tragleine (20) eine Öse (29) aufweist.

4. Trägervorrichtung (1) nach Anspruch 2 und 3,
**dadurch gekennzeichnet, dass**
jede radiale Tragleine (20) an einer Öse (22) einer Manschette (15) um den Außenring (13) befestigt ist.

5. Trägervorrichtung (1) nach Anspruch 2 und 3,
**dadurch gekennzeichnet, dass**
jede radiale Tragleine (20) über ein Spannelement (24) mit einer Öse (29) des zentralen Innenrings (23) verbunden ist.

6. Trägervorrichtung (1) nach einem der Ansprüche 1 bis 5,
**dadurch gekennzeichnet, dass**
der zentrale Hahnepotring (9) der oberen Hahnepot (7) direkt an dem zentralen Auftriebsmittel (4) angreift.

7. Trägervorrichtung (1) nach einem der Ansprüche 1 bis 5,
**dadurch gekennzeichnet, dass**
der zentrale Hahnepotring (9) der oberen Hahnepot (7) unter Zwischenschaltung einer in ihrer Länge festlegbaren Absenkleine an dem zentralen Auftriebsmittel (4) angreift.

8. Trägervorrichtung (1) nach einem der Ansprüche 1 bis 7,
**dadurch gekennzeichnet, dass**
der zentrale Hahnepotring (10) der unteren Hahnepot (8) über eine frei drehbare Drehkupplung (32) an einer mit einem Ankerstein (17) verbundenen Ankerkette (16) als Verankerung (5) angreift.

9. Trägervorrichtung (1) nach einem der Ansprüche 1 bis 8,
**dadurch gekennzeichnet, dass**
die oberen Hahnepotseile (11) alle gleichlang sind.

10. Trägervorrichtung (1) nach einem der Ansprüche 1 bis 9,
**dadurch gekennzeichnet, dass**
alle Seil-, Leinen- und Kettenverbindungen über Ösen (18) an den Seil-, Leinen und Kettenenden hergestellt sind.

11. Trägervorrichtung (1) nach einem der Ansprüche 1 bis 10,
**dadurch gekennzeichnet, dass**
der Außenring (13) aus einer in einem Kunststoffrohr (26) umlaufenden Stahltrosse (25) besteht.

12. Trägervorrichtung (1) nach einem der Ansprüche 1 bis 11,
**dadurch gekennzeichnet, dass**
das zentrale Auftriebsmittel (4) eine Öse (28) zum Hieven und Fieren der Trägervorrichtung (1) aufweist.

13. Trägervorrichtung (1) nach einem der Ansprüche 1 bis 12,
**dadurch gekennzeichnet, dass**
mehrere gleichartige Ringkonstruktionen (2) zusammengeschaltet sind.

## Claims

1. Support device (1) for the culture of macro-organisms (31) in marine waters, with at least one ring structure (2) which is arranged beneath the water surface (3) between at least one floatation means (4) and an anchoring (5) and has a culture unit (19) in a closed outer ring (13), which unit is made up of radial support lines (20) and azimuthal culture lines (21) in the shape of a spider web,
**characterized in that**
the outer ring (13) is connected to a central floatation means (4) via an upper bridle (7) and to the anchoring (5) via a lower bridle (8), wherein each bridle (7, 8) is made up of a central bridle ring (9, 10) and a plurality of bridle cables (11, 12) fixed at regular intervals on the circumference of the outer ring (13) and extending upwards and downwards from common attachment points (14) in each case, **in that** the radial support lines (20) are fixed under tension to a central inner ring (23) and **in that** the central floatation means (4) is connected directly to the anchoring (5) via at least one central support cable (6) which runs through the central inner ring (23) and is attached to the two bridle rings (9, 10).

2. Support device (1) according to Claim 1,
**characterized in that**
each common attachment point (14) on the outer ring (13) is formed from a flexurally rigid collar (15) which has a lug (18, 22) for an upper and a lower bridle cable (11, 12) as well as for a radial support line (20) respectively.

3. Support device (1) according to Claim 1 or 2,
**characterized in that**
the central inner ring (23) has a lug (29) for each radial support line (20).

4. Support device (1) according to Claim 2 and 3,
**characterized in that**
each radial support line (20) is fixed to a lug (22) of a collar (15) around the outer ring (13).

5. Support device (1) according to Claim 2 and 3,
**characterized in that**
each radial support line (20) is connected to a lug (29) of the central inner ring (23) via a clamping element (24).

6. Support device (1) according to one of Claims 1 to 5,
**characterized in that**
the central bridle ring (9) of the upper bridle (7) is directly attached to the central floatation means (4).

7. Support device (1) according to one of Claims 1 to 5,
**characterized in that**
The central bridle ring (9) of the upper bridle (7) is attached to the central floatation means (4) with the interposition of a lowering line, the length of which lowering line can be defined.

8. Support device (1) according to one of Claims 1 to 7,
**characterized in that**
the central bridle ring (10) of the lower bridle (8) is attached to an anchor chain (16), which is connected to a killick (17), as an anchoring (5) via a freely rotatable rotational coupling (32).

9. Support device (1) according to one of Claims 1 to 8,
**characterized in that**
the upper bridle cables (11) are all equally long.

10. Support device (1) according to one of Claims 1 to 9,
**characterized in that**
all cable, line and chain connections are produced via lugs (18) at the cable, line and chain ends.

11. Support device (1) according to one of Claims 1 to 10,
**characterized in that**
the outer ring (13) consists of a circumferential steel hawser (25) in a plastic tube (26).

12. Support device (1) according to one of Claims 1 to 11,
**characterized in that**
the central floatation means (4) has a lug (28) for heaving and veering the support device (1).

13. Support device (1) according to one of Claims 1 to 12,
**characterized in that**
a plurality of ring structures (2) of the same kind are interconnected.

## Revendications

1. Dispositif porteur (1) pour la culture de macro-organismes (31) dans des eaux marines comprenant au moins une construction de bague (2), qui est disposée au-dessous de la surface de l'eau (3) entre au moins un moyen de force ascensionnelle (4) et un ancrage (5) et présente dans une bague extérieure (13) fermée une unité de culture (19) de type toile d'araignée constituée de cordes porteuses (20) radiales et de cordes de culture (21) azimutales, **caractérisé en ce que,** la bague extérieure (13) est reliée à un moyen central de force ascensionnelle (4) à l'aide d'une araignée (7) supérieure et à l'ancrage (5) à l'aide d'une araignée (8) inférieure, chaque araignée (7, 8) étant constituée d'une bague d'araignée (9, 10) centrale et de plusieurs câbles d'araignée (11, 12) fixées de façon uniforme sur le pourtour de la bague extérieure (13) et s'étendant vers le haut et vers le bas à chaque fois à partir de points d'accrochage (14) communs, **en ce que** les cordes porteuses (20) radiales sont fixées sous tension sur une bague intérieure (23) centrale et **en ce que** le moyen de force ascensionnelle (4) central est relié directement à l'ancrage (5) au moyen d'au moins un câble porteur (6) central agencé à travers la bague intérieure (23) centrale et accroché sur les deux bagues d'araignée (9, 10).

2. Dispositif porteur (1) selon la revendication 1, **caractérisé en ce que** chaque point d'accrochage (14) commun est formé sur la bague extérieure (13) par une manchette (15) rigide en flexion, qui présente à chaque fois un anneau (18, 22) pour un câble d'araignée (11, 12) supérieur et inférieur ainsi que pour une corde porteuse (20) radiale.

3. Dispositif porteur (1) selon la revendication 1 ou 2, **caractérisé en ce que** la bague intérieure (23) centrale présente un anneau (29) pour chaque corde porteuse (20) radiale.

4. Dispositif porteur (1) selon les revendications 2 et 3, **caractérisé en ce que** chaque corde porteuse (20) radiale est fixée sur un anneau (22) d'une manchette (15) autour de la bague extérieure (13).

5. Dispositif porteur (1) selon les revendications 2 et 3, **caractérisé en ce que** chaque corde porteuse (20) radiale est reliée par un élément de tension (24) à un anneau (29) de la bague intérieure (23) centrale.

6. Dispositif porteur (1) selon l'une quelconque des revendications 1 à 5, **caractérisé en ce que** la bague d'araignée (9) centrale de l'araignée (7) supérieure s'applique directement sur le moyen de force ascensionnelle (4) central.

7. Dispositif porteur (1) selon l'une quelconque des revendications 1 à 5, **caractérisé en ce que** la bague d'araignée (9) centrale de l'araignée (7) supérieure s'applique sur le moyen de force ascensionnelle (4) central avec intercalation d'une corde d'abaissement pouvant être définie dans sa longueur.

8. Dispositif porteur (1) selon l'une quelconque des revendications 1 à 7, **caractérisé en ce que** la bague d'araignée (10) centrale de l'araignée (8) inférieure s'applique en tant qu'ancrage (5) au moyen d'un accouplement rotatif (32) pouvant tourner librement sur une chaîne d'ancre (16) reliée à une pierre d'ancrage (17).

9. Dispositif porteur (1) selon l'une quelconque des revendications 1 à 8, **caractérisé en ce que** les câbles d'araignée (11) supérieurs sont de même longueur.

10. Dispositif porteur (1) selon l'une quelconque des revendications 1 à 9, **caractérisé en ce que** toutes les liaisons par câble, corde et chaîne sont établies au moyen d'anneaux (18) sur les extrémités de câbles, cordes et chaînes.

11. Dispositif porteur (1) selon l'une quelconque des revendications 1 à 10, **caractérisé en ce que** la bague extérieure (13) comprend un filin d'acier (25) faisant le tour dans un tuyau plastique (26).

12. Dispositif porteur (1) selon l'une quelconque des revendications 1 à 11, **caractérisé en ce que** le moyen central de force ascensionnelle (4) présente un anneau (28) pour le halage et le filage du dispositif porteur (1).

13. Dispositif porteur (1) selon l'une quelconque des revendications 1 à 12, **caractérisé en ce que** plusieurs constructions de bague (2) de même type sont interconnectées.
